# EUROPEAN PATENT SPECIFICATION

(11) **EP 2 370 730 B1**
(45) Date of publication and mention of the grant of the patent: **22.04.2015**
(21) Application number: 09796760.8
(22) Date of filing: 04.12.2009
(51) Int. Cl.: F23C 10/20

(54) **OXYCOMBUSTION CIRCULATING FLUIDIZED BED REACTOR, METHOD OF OPERATING SUCH A REACTOR AND METHOD OF UPGRADING A CIRCULATING FLUIDIZED BED REACTOR**
ZIRKULIERENDER WIRBELSCHICHTREAKTOR MIT SAUERSTOFFVERBRENNUNG, VERFAHREN ZUM BETRIEB SOLCH EINES REAKTORS UND VERFAHREN ZUR NACHRÜSTUNG EINES ZIRKULIERENDEN WIRBELSCHICHTREAKTORS
RÉACTEUR À LIT FLUIDISÉ CIRCULANT À OXYCOMBUSTION, PROCÉDÉ D'EXPLOITATION D'UN TEL RÉACTEUR ET PROCÉDÉ DE MISE À NIVEAU D'UN RÉACTEUR À LIT FLUIDISÉ CIRCULANT

(30) Priority: 12.12.2008 FI 20086192
(43) Date of publication of application: 05.10.2011
(73) Proprietor: Foster Wheeler Energia Oy, 02130 Espoo (FI)
(72) Inventor: ERIKSSON, Timo, FIN-78300 Varkaus (FI)
(74) Representative: Salonen, Kauko Tuomas
(86) International application number: PCT/FI2009/050977
(87) International publication number: WO 2010/066947

(56) References cited:
- WO-A1-2005/119126
- US-A- 4 460 330
- US-A- 5 372 791

## Description

### Technical field

The present invention relates to oxycombustion fluidized bed reactors and their operation. The invention particularly relates to an apparatus for and a method of introduction of gas into such reactor.

More specifically, the invention relates to an oxycombustion circulating fluidized bed reactor, comprising a reactor chamber and a gas distribution arrangement provided in the bottom section of the reactor chamber for introducing gas into the reactor chamber, which gas distributor arrangement comprises a windbox chamber having gas introduction nozzles, the gas introduction nozzles being arranged for introducing gas from the windbox chamber into the reactor chamber and having an inlet which opens into the windbox chamber, and a first gas feeding system for introducing gas into the windbox chamber.

Invention also relates to a method of operating an oxycombustion circulating fluidized bed reactor comprising a reactor chamber and a gas distribution arrangement provided in the bottom section of the reactor chamber, in which method gas is introduced into the reactor chamber through a windbox chamber having gas introduction nozzles with an inlet, in which method gas is introduced to the windbox chamber through a first gas feeding system.

Invention relates further to a method of upgrading an existing circulating fluidized bed reactor having a wind box chamber provided with nozzles and a first gas feeding system for feeding gas to the wind box chamber, comprising steps of arranging a second gas feeding system having a plurality of feed pipes below the grid nozzle inlets in the wind box chamber of the existing circulating fluidized bed reactor.

### Background art

New regulations and other demands limiting the gas emissions relating to the so called greenhouse effect have fostered the development of new technologies aiming at decreasing carbon dioxide emissions from power stations using fossil carbonaceous fuels. While in conventional firing the oxygen required for burning the fuel is fed in the form of air, in oxycombustion air is replaced with a mixture of substantially pure oxygen and recycled flue gas, which may be called oxidant.

For example, US patent 6,505,567 discloses a circulating fluidized bed steam generator, in which the combustion is supported by recycled carbon dioxide, which is a product gas of the combustion. The combustion is maintained by means of pure oxygen, which is introduced into the circulating fluidized bed steam generator. Introducing pure oxygen may create areas with a very high local temperature, which is not desired due to, e.g., the stresses caused to the constructional element close to those areas and increasing risk of bed material melting and agglomeration.

The introduction of oxygen into a circulating fluidized bed reactor is a particularly delicate process. Uneven distribution of oxygen may create local overheated spots, which are also prone to cause problems, such as agglomeration of bed material. This is particularly the case when pure oxygen is in question.

In circulating fluidized bed reactors, the fluidization gas velocities vary considerably since also the variation of load requires respective changes in the gas amounts fed through a grid of the reactor. The operational range of the grid is determined, e.g., by the pressure drop, which should not be excessive during high loads and yet during low load operation, the pressure drop should be adequate to provide even distribution of gas flow over the cross sectional area of the grid and prevent flow of solids from the reaction chamber into the windbox. In practice, there is a certain minimum air flow which must be fed through the grid also during low load operation, which in some cases may be a limiting factor to the lowest obtainable load from the reactor.

US patent 4,628,831 discloses a grid for conveying gaseous fluidization fluid to a treatment chamber using fluidized bed. The grid comprises two separately supplied circuits of channels, a first circuit of channels with orifices widened towards the top, for providing a dense fluidized bed in the chamber, and a second circuit of tubular channels, opening out above the widened orifices, for providing a forced fluidized bed of particles in the chamber, respectively. This kind of a grid of two separate sets of nozzles and pipe networks is very complicated to manufacture.

WO 2005119126 discloses a fluidized bed device having a combustion chamber in which the bottom section is provided with first-type and second-type primary gas supply nozzles. Firstly, the first-type nozzles are provided for injecting a first gas mixture at a first level close to the base of the chamber by means of a conventional wind box and nozzles. Secondly, the second-type nozzles are provided for injecting a second gas mixture enriched in oxygen at a second level above the first level. According to WO 2005119126, said second-type nozzles comprise an arrangement for mixing oxygen with a second gaseous component within the nozzle, connected at the lower end thereof to an oxygen supply and to a supply of the second gaseous component. The second gaseous component is mentioned to be either the gas from the wind box or from separate gas collector.

In this kind of an arrangement in which the oxygen is mixed in the nozzle with the gas introduced from the wind box, the control of the oxygen ratio in the mixture is always dependent on the pressure prevailing in the wind box and the independent control is difficult, if not impossible.

Particularly in oxycombustion circulating fluidized bed reactors, there is, in addition to variation of gas velocities due to load variations, also a question of a proper introduction of oxygen-rich gas into the process maintained in the oxycombustion circulating fluidized bed reactor.

An object of the invention is to provide an oxycombustion circulating fluidized bed reactor which provides an advanced solution for introducing both recycled gas and oxygen-rich gas into the oxycombustion circulating fluidized bed reactor.

Another object of the invention is to provide a method of operating an oxycombustion circulating fluidized bed reactor which provides efficient way of providing combustion at elevated oxygen content.

A further object of the invention is to provide a method of upgrading an existing circulating fluidized bed reactor to an oxycombustion circulating fluidized bed reactor.

### Disclosure of the invention

Objects of the invention are met by an oxycombustion circulating fluidized bed reactor which comprises a reactor chamber and a gas distribution arrangement provided in the bottom section of the reactor chamber for introducing gas into the reactor chamber, which gas distribution arrangement comprises a windbox chamber having gas introduction nozzles, the gas introduction nozzles being arranged for introducing gas from the windbox chamber into the reactor chamber and an having an inlet which opens into the windbox chamber, and a first gas feeding system for introducing gas into the windbox chamber. The gas distributor arrangement further comprises a second gas feeding system for introducing gas into the wind box chamber in the vicinity of at least one nozzle inlet.

This way, the construction of the windbox may be of conventional materials and the grid nozzles may be simple yet having the possibility of operating the oxycombustion circulating fluidized bed reactor with flexibly controllable oxygen content in the gas introduced therein. This also provides a straightforward manner of retrofitting and existing air operated reactor to be upgraded into oxycombustion circulated fluidized bed reactor.

Preferably, the second gas feeding system comprises a number of outlets, each of the outlets being arranged to direct the gas to be fed towards the nozzle inlet. The outlets are arranged at a distance from the nozzle inlets and arranged to direct the gas into the nozzle inlet. This way the mixing of the gases is commenced at the nozzle inlet and the risk of clogging of the nozzles is minimized since the outlets are arranged below the nozzle inlet. Additionally, since the outlets are in a distance from the nozzle inlet and thus not mechanically coupled with the nozzle the structure is less vulnerable to damages due to thermal stresses..

According to another embodiment of the invention, the majority of the nozzles in the grid of the reactor are of one type. The type of the nozzles is such that the gas flow channel in the nozzle is formed of a channel substantially without internal mixing elements or alike. This improves the very flexible operation of the reactor due to the fact that the second gas feeding system has only minor effect on the operation of the first gas feeding system as such.

The outlet of the second gas feeding system and the nozzle inlet are preferably so arranged in respect of each other that they provide an ejector effect of some degree. In practice, the ejector effect does not need to be very efficient since both of the first and the second gas feeding system are working under pressure. In practice, the outlet preferably is so arranged that the gas jet reaches the nozzle inlet.

The reactor chamber is provided with a particle separator for separating fluidized particles which are entrained with the gases resulted in the reactions taken place in the reaction chamber, and the particle separator is provided with a gas outlet and an outlet for separated particles. The gas outlet is arranged in flow communication with the first gas feeding system via a recycling conduit. Further, the recycling conduit is provided with a gas mixing unit and that the gas mixing unit is in flow communication with a source of oxygen-rich gas. Also the second gas feeding system is in flow communication with a source of oxygen-rich gas.

Objects of the invention are met with the method of operating an oxycombustion circulating fluidized bed reactor according to claim 9.

The stream of oxygen-rich gas is introduced towards the inlet of at least one nozzle through an outlet in a second gas feeding system.

The stream of oxygen-rich gas from the second gas feeding system in introduced so that a jet of oxygen-rich gas is reaches the inlet of the grid nozzle. This way oxygen-rich gas flows only into the nozzle.

A mixture of recycled exhaust gas and oxygen is introduced to the windbox chamber through the first gas feeding system and gas containing more than 90% of oxygen is introduced into the vicinity of the inlet of at least one nozzle through the second gas feeding system.

The mixing of the stream of oxygen-rich gas to the gas introduced through the first gas feeding system to the windbox chamber is commenced at the inlet of the nozzle.

Objects of the invention are also met with a method of upgrading an existing circulating fluidized bed reactor according to claim 14.

The existing circulating fluidized bed reactor is further provided with exhaust gas recycling conduit connecting the exhaust gas conduit to the wind box chamber of the reactor. Advantageously, the source of oxygen-rich gas is further arranged in connection with the first gas feeding system in order to increase the oxygen content of the recycled gas.

The recycling conduit is further connected to possibly existing secondary gas inlets.

This makes it possible to upgrade an existing, conventional air-operated circulating fluidized bed reactor into an oxycombustion circulating fluidized bed reactor in which an exhaust gas may be re-circulated back to the reactor chamber and to change the composition of the exhaust gases and in which oxygen is brought into the circulated exhaust gas while it is entering into the nozzles.

The other claims present more details of different embodiments of the invention.

### Brief Description of Drawing

In the following, the invention will be described with reference to the accompanying schematic drawings, in which
Figure 1 illustrates an oxycombustion circulating fluidized bed reactor provided with a gas distributor arrangement according to an embodiment of the invention,
Figure 2 illustrates a detail II from Figure 1,
Figure 3 illustrates section III-III from Figure 2,
Figure 4 illustrates another embodiment of detail II,
Figure 5 illustrates a still another embodiment of detail II, and
Figure 6 illustrates a still another embodiment of detail II.

### Detailed Description of Drawing

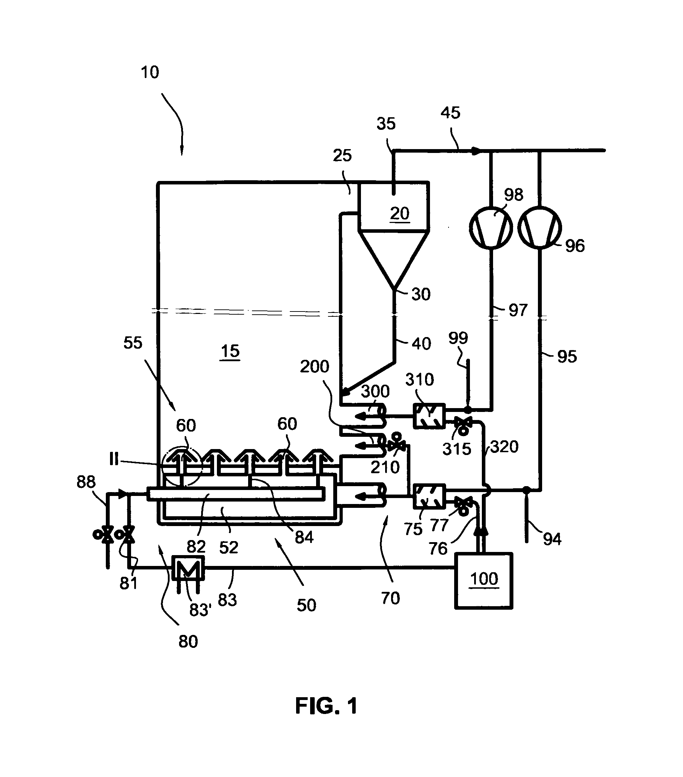

Figure 1 schematically shows an oxycombustion circulating fluidized bed reactor 10, which comprises a reactor chamber 15 and a particle separator 20 connected to the upper part of the reactor chamber 15 via a connection conduit 25. Particle separator 20 is provided with a particle outlet 30 and a gas outlet 35. The particle outlet 30 is connected to a particle return channel 40. The particle separator 20 is preferably of centrifugal separator type. The return channel may be provided, e.g., with a separate particle cooler or other particle handling system (not shown herein).

Exhaust gas, which in normal operation of combustion contains mostly CO₂ and H₂O, is led further to an exhaust gas conduit 45 via the gas outlet 35 of the particle separator. The exhaust gas is subjected to certain treatment processes, such as heat recovery process, provided in connection with the exhaust gas conduit 45, but not shown here for clarity reasons.

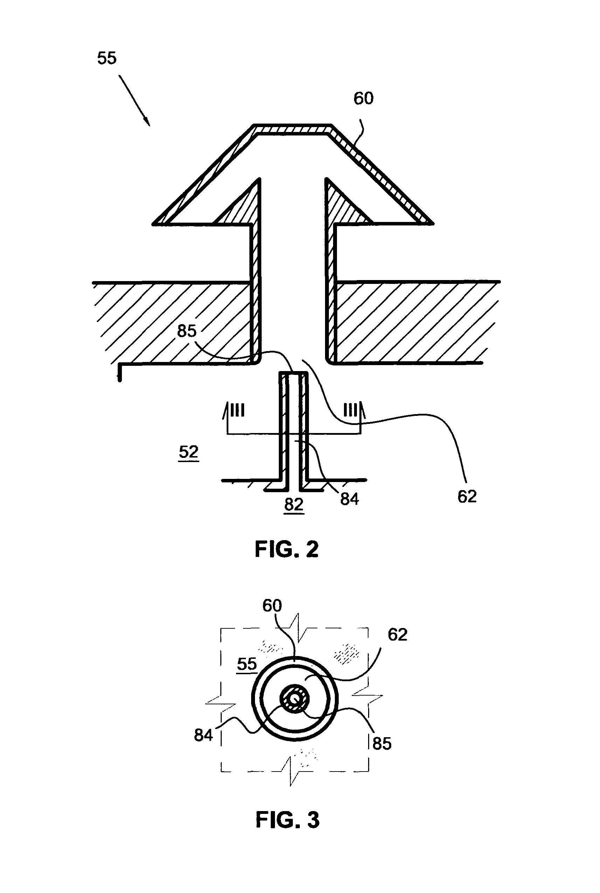

The bottom section of the reactor chamber 15 is provided with a gas distribution arrangement 50, which comprises a grid 55 provided with nozzles 60 through which oxygen containing gas is introduced into the reactor chamber 15 for fluidization and process purposes. Regardless of the contents of the gas, all the gas introduced through the grid 55 participates to the fluidization of the bed material. In addition to the grid 55, the gas distribution arrangement 50 comprises a windbox chamber 52 below the grid into which gas introduction nozzles 60 of the grid are arranged in order to introduce gas controllably from the windbox chamber 52 to the reactor chamber 15. Thus, the nozzles provide flow connection there between and have an inlet 62 which opens into the windbox chamber 52. The detail II of the Figure 1 is shown in Figures 2 and 3 describing an exemplary embodiment of the nozzle 60 in the grid 55. The nozzles are distributed substantially evenly over the area of the grid 55.

The gas distribution arrangement 50 comprises a first gas feeding system 70, which is provided for introducing gas into the windbox chamber 52. The first gas feeding system 70 is in flow communication with the exhaust gas conduit 45 and with the wind box chamber 52 so as to allow a recirculation of the exhaust gas to the windbox and further back to the reactor chamber 15. The reactor is provided with a recycling conduit 95 which connects the exhaust gas conduit 45 to the first gas feeding system 70. The recycling conduit 95 is provided with a recycling blower 96 or alike.

The oxycombustion circulating fluidized bed reactor comprises also a source of oxygen-rich gas 100, like an Air Separation Unit (ASU). The source of oxygen-rich gas 100 is in connection with the first gas feeding system through a first gas mixing unit 75 by means of a first oxygen feed line 76. The first oxygen feed line 76 is provided with a flow control device 77 like a valve in order to control the amount of oxygen. The recycling conduit 95 in turn is connected to the first gas feeding system 70 through the gas mixing unit 75. Thus, in the gas mixing unit 75 a controllable amount of oxygen may be brought into the recycled exhaust gas and mixed thereto prior to entering the windbox chamber 52. This way the recycled exhaust gas and the added oxygen form oxidant gas for the combustion process.

The gas distribution arrangement 50 of the oxycombustion circulating fluidized bed reactor further comprises a second gas feeding system 80. The second gas feeding system 80 comprises preferably a distribution manifold 82 or alike. The second gas feeding system may be realized in various ways in practice. In some application the second gas feeding system may be comprise several parts of a whole i.e. it may be divided into sub-systems each arranged to introduce oxygen-rich gas to a number of grid nozzles. The manifold is arranged at least partly in the windbox chamber 52 below the grid 55. In the embodiment shown in figures 1-3, a plurality of feed pipes 84 are arranged to the manifold so, that each feed pipe has an outlet 85, and the outlet is arranged to open into the vicinity of the nozzle inlet 62. The outlet 85 of the feed pipe 84 is directed towards the inlet 62 or the nozzle. Thus, in operation the gas fed through the second gas feeding system is also fed towards the nozzle inlet 62. The outlet 85 of the feed pipe 84 and the nozzle inlet 62 are preferably arranged to form an ejector device. Since the second gas feeding system has only limited volume and substantially small sized outlets the need of special high-temperature / high-oxygen content durable material is minimized.

As is depicted in figure 3 the inlet 62 of the nozzle 60 and the outlet 85 of the feed pipe 84 are preferably circular in cross section and coaxially arranged. The outlet is arranged to open below the nozzle inlet 62, at a distance from the nozzle.

Depending on the actual application the number of feed pipes 84 in relation to the number of the grid nozzles 60 may vary. Typically at least 20% of the nozzles is provided with feed pipe.

The second gas feeding system 80 is in connection with the source of oxygen-rich gas 100, e.g. Air Separation Unit (ASU). The manifold 82 is connected to the source of oxygen-rich gas 100 by means of a second oxygen feed line 83. The second oxygen feed line 83 is provided with a flow control device 81 like a valve in order to control the flow rate, and thus the amount of oxygen in the oxidant fed to the reactor chamber 15. There is also provided an optional inlet of other gases, steam or N₂ with a control valve in connection with the distribution manifold 82.

The second oxygen feed line 83 is preferably provided with a gas heating device 83' to preheat the oxygen-rich gas prior to introducing into the grid nozzle. In practice the heating device may be realised in various manners.

The reactor may be operated both for air combustion and oxygen-rich combustion. The first gas feeding system has a branch 200 for feeding upper primary gas into the reactor chamber 15. Thus, according to an embodiment of the invention in order to maintain the pressure drop over the grid at a same level during air and oxygen-rich operation part of the oxidant gas may be fed through the upper primary gas branch 200. The upper primary gas branch 200 is branched from the first gas feeding system thus and it is provided with a control valve 210 for controlling the amount of gas flow through the branch. The density of the oxidant (mixture of the recycled exhaust and oxygen) may be even 20-25% higher than air density, thus it is advantageous to feed part of the oxidant through the upper primary gas branch 200.

The oxycombustion circulating fluidized bed reactor preferably comprises also a feed system 300 for secondary oxidant above the upper primary gas branch 200. The feed system 300 comprises a second gas mixing unit 310 into which a third oxygen feed line 320 is extending from the source of oxygen rich gas 100. The third oxygen feed line 320 is also provided with a flow control device 315, such as control valve. The reactor is provided with a second recycling conduit 97 which connects the exhaust gas conduit 45 to the second gas mixing unit 310 of the feed system 300 for secondary oxidant. The second recycling conduit 97 is provided with a recycling blower 98 or alike. According to a first embodiment of the invention, the oxycombustion circulating fluidized bed reactor 10 is operated for combustion of fuel as is described in the following. The product gas from the combustion of carbonaceous fuel, consisting mainly of CO₂ and H₂O, is at least partly recycled back to the reactor 15 so that after a start-up phase, instead of air, the reactor may be operated with a mixture of the product gas and oxygen. This way the presence of nitrogen is avoided and recovery of CO₂ from the exhaust gases may be arranged more easily.

The product gas is fed through the recycling conduit 95 to the first gas mixing unit 75 in which oxygen or oxygen rich gas is mixed therein and the mixture is introduced through the first gas feeding system 70 to the windbox chamber 52. The pressure in the wind box chamber 52 is maintained at a predetermined level. This results in substantially even gas flow through the grid 55 into the reactor chamber 15. The flow control device 77 in the first oxygen feed line is controlled to maintain the oxygen content in the gas in the wind box chamber 52 at a first predetermined level. In the first embodiment this is about 21 - 28 vol.-%, that is only slightly above the oxygen content of the air. The oxygen content in the wind box chamber 52 preferably is adjusted such that a risk of self ignition of any combustible material present in the wind box chamber is minimized. This also practically eliminates the need of special materials required by high-temperature and high-oxygen content circumstances. This way the operation of the reactor is reliable and safe and the construction of the first gas feeding system may be of conventional materials.

The second gas feeding system 80 is utilized so that the gas in the second gas feeding system is introduced in the vicinity of at least one nozzle inlet 62 into the gas flow from the windbox chamber entering the inlet 62. The flow control device 81 in the second oxygen feed line 83 is controlled to maintain the oxygen content in the gas at a second predetermined level which is higher than the first predetermined level. This way the oxygen content of the gas fed through the grid increased while the gas is flowing through the grid nozzles.

The gas fed through the second feeding system 80 has oxygen content of more than 90%, preferably the gas is substantially pure oxygen.

A separately controlled stream of substantially pure oxygen is fed through the second feeding system. The arrangement is designed so that besides oxygen also oxidant mixture from the windbox is entrained into the nozzle. The mixing of the oxygen fed through the feed pipes 84 to the oxidant (recycled exhaust gas and added oxygen) begins immediately and substantially whole nozzle 60 is utilized to the mixing. This way the internal construction of the nozzle can be made simple, thus decreasing, for example, the risk of clogging of the nozzle.

The grid nozzles are preferably made of alloys resistant for oxygen environment and may be also internally coated with appropriate materials. The fairly high gas velocities inside the nozzles keep the surfaces clean of impurities. Even if ignition would occur locally, the amount of generated heat remains low and damages are minimized. The feed pipes 84 can be installed for only part of the grid nozzles or all of them, depending e.g. on the oxygen needs.

The distribution manifold 82, in which a plurality of feed pipes 84 are arranged below the grid nozzle inlets 62, is very flexible in practice. The present invention can be applied also in retrofit applications, in oxy-ready concept with later installation of the second feeding system 80, in dual firing and also high-O₂ boiler concepts.

Thus, the according to an embodiment of the invention a method of upgrading an existing circulating fluidized bed reactor having a wind box chamber provided with nozzles and a first gas feeding system for feeding gas to the wind box chamber comprises steps of arranging a second gas feeding system 80 having a plurality of feed pipes 84 below the grid nozzle inlets 62 in the wind box chamber of the existing circulating fluidized bed reactor. Preferably the feed pipes 84 are arranged in the vicinity of a group of the nozzles 60 in the grid. The number of nozzles belonging to above-mentioned the group of the nozzles 60 is determined based on the process issues in question.

Additionally the first gas feeding system and the second gas feed system are connected to a source of oxygen-rich gas.

With a further modification of the method the existing circulating fluidized bed reactor is provided with exhaust gas recycling conduit 95 connecting the exhaust gas conduit 45 to the wind box chamber 52. This makes it possible to provide an oxycombustion circulating fluidized bed reactor in which a exhaust gas may be re-circulated back to the reactor chamber and in which oxygen is brought into the circulated exhaust gas while its entering into the grid nozzles.

In oxycombustion mode the density of oxidant may be 20 - 25 % higher than air density, which affects the pressure drop at similar velocities. The pressure drop across the grid can be controlled by leading part of the primary oxidant stream to upper primary oxidant nozzles.

Feeding different oxidant compositions through different feed points, e.g. primary, upper primary level, secondary and tertiary feed points provides an opportunity to control temperature (and velocity and solids density) profiles in the furnace. This enables for instance adjustment of the temperature in the lower bed area optimal for sulphur capture with limestone.

Depending on the concept, the average O₂ concentration of the oxidant (recycled gas) may be even considerably high (e.g. 60%).

Hence, the O₂ concentration in the windbox can be kept below the level considered acceptable regarding self-ignition of any impurities in the windbox, taking into account safety margins. A separately controlled stream of substantially pure oxygen is fed through feed pipes 84 installed inside the windbox and provided with simple nozzles that discharge at the lower end of normal grid nozzles.

The total flow rate of the gas introduced through the grid 55 is regulated based on the load of the oxycombustion circulating fluidized bed reactor and/or a predetermined requirement of the amount of fluidization gas flow rate. The amount of oxygen introduced through the second gas feeding system 80 is regulated based on predetermined target value of oxygen content of the gas introduced into the reactor.

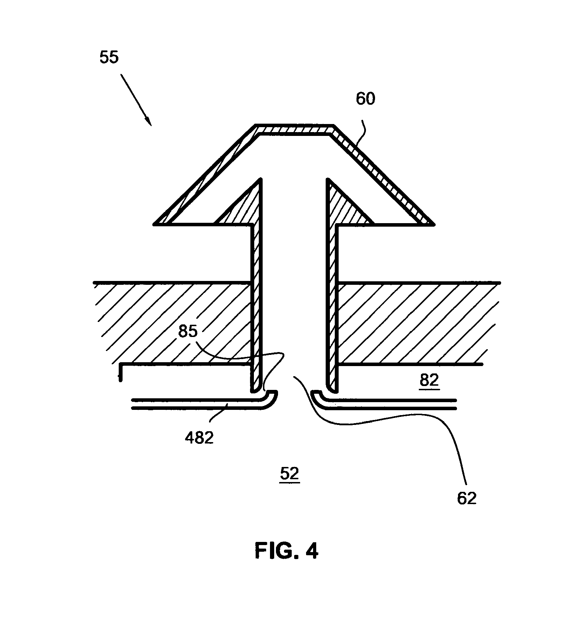

In Figure 4, there is shown another embodiment of detail II in Figure 1. In this embodiment the manifold 82 is a space formed by a wall 482 arranged below the grid 55 and vertically substantially at the nozzle inlet 62 which is extending downwards from the lower plane of the grid. The wall 482 is provided with openings forming a slot-like outlet 85 with the periphery of the inlet 62.

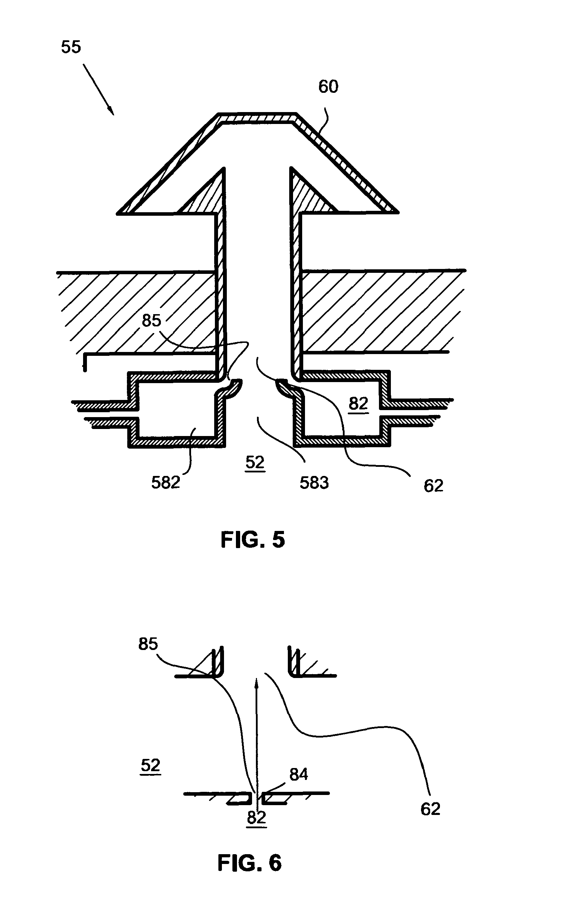

In Figure 5, there is shown still another embodiment of detail II in Figure 1. In this embodiment the manifold 82 is formed of a set of separate chambers 582 arranged below the grid 55 and vertically substantially at the nozzle inlets 62 extending downwards from the lower plane of the grid. Each chamber 582 is provided with an opening forming a slot-like outlet 85 with the periphery of the inlet 62. The chambers 582 are provided with a through-hole 538 corresponding to the size of the inlet 62, the outlet 85 being arranged at the side of the hole 538 which is closest to the inlet 62.

Figure 6 shows a modification of arrangement shown in Figure 2 in which the feed pipe is a simple orifice 84 which has on outlet 85, and the outlet is arranged to open into the vicinity of the nozzle inlet 62. The gas flow jet is arranged to reach the inlet nozzle 62 as depicted by the arrow.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in another embodiment when technically feasible.

## Claims

1. An oxycombustion circulating fluidized bed reactor, comprising a reactor chamber (15) and a gas distribution arrangement (50) provided in the bottom section of the reactor chamber for introducing gas into the reactor chamber, which gas distributor arrangement comprises a windbox chamber having gas introduction nozzles, the gas introduction nozzles being arranged for introducing gas from the windbox chamber into the reactor chamber and an having an inlet which opens into the windbox chamber, and a first gas feeding system (70) for introducing gas into the windbox chamber, **characterized in that** the gas distributor arrangement (50) further comprises a second gas feeding system (80) for introducing gas into the wind box chamber in the vicinity of at least one nozzle inlet (62).

2. An oxycombustion circulating fluidized bed reactor according to claim 1, **characterized in that** the second gas feeding system comprises a number of outlets (85), each of the outlets being arranged to direct the gas to be fed towards the nozzle inlet (62).

3. An oxycombustion circulating fluidized bed reactor according to claim 2, **characterized in that** outlets are arranged to direct the gas into the nozzle inlet (62).

4. An oxycombustion circulating fluidized bed reactor according to claim 2, **characterized in that** outlets (85) are arranged at a distance below the nozzle inlet (62).

5. An oxycombustion circulating fluidized bed reactor according to any of the claims 2 - 4, **characterized in that** the outlet (85) and the inlet (62) provide ejector effect.

6. An oxycombustion circulating fluidized bed reactor according to claim 1, **characterized in that** the reactor chamber (15) is provided with a particle separator (20) for separating fluidized particles which are entrained with the gases resulted in the reactions taken place in the reaction chamber, and that the particle separator is provided with a gas outlet (35) and an outlet for separated particles (30), and that the gas outlet is arranged in flow communication with the first gas feeding system via a recycling conduit (95).

7. An oxycombustion circulating fluidized bed reactor according to claim 6, **characterized in that** the recycling conduit (95) is provided with a gas mixing unit and that the gas mixing unit in flow communication with a source of oxygen-rich gas (100).

8. An oxycombustion circulating fluidized bed reactor according to claim 1, **characterized in that** the second gas feeding system is in flow communication with a source of oxygen-rich gas (100).

9. A method of operating an oxycombustion circulating fluidized bed reactor comprising a reactor chamber (15) and a gas distribution arrangement (50) provided in the bottom section of the reactor chamber, in which method gas is introduced into the reactor chamber (15) through a windbox chamber (52) having gas introduction nozzles (60) with an inlet (62), in which method gas is introduced to the windbox chamber (52) through a first gas feeding system (70), **characterized in that** a stream of oxygen-rich gas is introduced through a second gas feeding system (80) into
the windbox chamber (52) in the vicinity of the inlet (62) of at least one nozzle (60).

10. A method of operating an oxycombustion circulating fluidized bed reactor according to claim 9, **characterized in that** the stream of oxygen-rich gas is introduced from a distance towards the inlet (62) of at least one the nozzle (60) through an outlet (85) in a second gas feeding system (80).

11. A method of operating an oxycombustion circulating fluidized bed reactor according to claim 9, **characterized in that** a mixture of recycled exhaust gas (45) and oxygen is introduced to the windbox chamber (52) through the first gas feeding system (70) and that gas containing more than 90% of oxygen is introduced into the vicinity of the inlet (62) of at least one nozzle (60) through the second gas feeding system (80).

12. A method of operating an oxycombustion circulating fluidized bed reactor according to claim 9, **characterized in that** the mixing of the stream of oxygen-rich gas to the gas introduced through the first gas feeding system (70) to the windbox chamber (52) is commenced at the inlet (62) of the nozzle.

13. A method of operating an oxycombustion circulating fluidized bed reactor according to claim 9, **characterized in that** the stream of oxygen-rich gas inlet (62) induce an ejector effect to the gas in the windbox chamber (52).

14. A method of upgrading an existing circulating fluidized bed reactor having a wind box chamber (52) provided with nozzles (60) for introducing gas from said wind box chamber (52) into a reactor chamber (15) and a first gas feeding system (70) for feeding gas to the wind box chamber (52), comprising steps of arranging a second gas feeding system (80) having a plurality of feed pipes (84) below and in the vicinity of the nozzle inlets (62) in the wind box chamber of the existing circulating fluidized bed reactor and arranging a source of oxygen-rich gas (100) in connection with the second gas feeding system (80).

15. A method of upgrading an existing circulating fluidized bed reactor according to claim 14, **characterized in that** the existing circulating fluidized bed reactor is provided with exhaust gas recycling conduit (95) connecting the exhaust gas conduit (45) to the wind box chamber (52) of the reactor and the source of oxygen-rich gas (100) is arranged in connection with the first gas feeding system (70).

## Patentansprüche

1. Zirkulierender Sauerstoffverbrennungs-Wirbelschichtreaktor, umfassend eine Reaktorkammer (15) und eine Gasverteilungsanordnung (50), die im unteren Teil der Reaktorkammer vorgesehen ist zur Einführung von Gas in die Reaktorkammer, welche Gasverteilungsanordnung einen Windkasten mit Gaseinlassdüsen umfasst, welche Gaseinlassdüsen zur Einführung von Gas aus dem Windkasten in die Reaktorkammer angeordnet sind und einen Einlass, der sich in den Windkasten öffnet, und ein erstes Gaszufuhrsystem (70) zur Einführung von Gas in den Windkasten haben, **dadurch gekennzeichnet, dass** die Gasverteileranordnung (50) des Weiteren ein zweites Gaszufuhrsystem (80) zur Einführung von Gas in den Windkasten in der Nähe zumindest einer Einlassdüse (62) umfasst.

2. Zirkulierender Sauerstoffverbrennungs-Wirbelschichtreaktor nach Patentanspruch 1, **dadurch gekennzeichnet, dass** das zweite Gaszufuhrsystem eine Anzahl Auslässe (85) umfasst, wobei jeder der Auslässe zur Leitung der Gaszufuhr auf den Düseneinlass (62) hin angeordnet ist

3. Zirkulierender Sauerstoffverbrennungs-Wirbelschichtreaktor nach Patentanspruch 2, **dadurch gekennzeichnet, dass** die Auslässe derart angeordnet sind, dass sie das Gas in den Düseneinlass (62) leiten.

4. Zirkulierender Sauerstoffverbrennungs-Wirbelschichtreaktor nach Patentanspruch 2, **dadurch gekennzeichnet, dass** die Auslässe (85) in einem Abstand unterhalb des Düseneinlasses (62) angeordnet sind.

5. Zirkulierender Sauerstoffverbrennungs-Wirbelschichtreaktor nach einem der Patentansprüche 2 bis 4, **dadurch gekennzeichnet, dass** der Auslass (85) und der Einlass (62) eine Ejektorwirkung zustande bringen.

6. Zirkulierender Sauerstoffverbrennungs-Wirbelschichtreaktor nach Patentanspruch 1, **dadurch gekennzeichnet, dass** die Reaktorkammer (15) mit einem Partikelabscheider (20) zur Abscheidung von fluidisierten Partikeln versehen ist, die von den in den in der Reaktorkammer ablaufenden Reaktionen entstehenden Gasen mitgeführt werden und dass der Partikelabscheider mit einem Gasauslass (35) und einem Auslass für abgeschiedene Partikel (30) versehen ist und dass der Gasauslass über einen Rückführkanal (95) mit dem ersten Gaszufuhrsystem in Strömungsverbindung steht.

7. Zirkulierender Sauerstoffverbrennungs-Wirbelschichtreaktor nach Patentanspruch 6, **dadurch gekennzeichnet, dass** der Rückführkanal (95) mit einer Gasmischeinheit versehen ist und dass die Gasmischeinheit mit einer Quelle für sauerstoffreiches Gas (100) in Strömungsverbindung steht.

8. Zirkulierender Sauerstoffverbrennungs-Wirbelschichtreaktor nach Patentanspruch 1, **dadurch gekennzeichnet, dass** das zweite Gaszufuhrsystem mit einer Quelle für sauerstoffreiches Gas (100) in Strömungsverbindung steht.

9. Verfahren zum Betreiben eines zirkulierenden Sauerstoffverbrennungs-Wirbelschichtreaktors bestehend aus einer Reaktorkammer (15) und einer Gasverteilungsanordnung (50), die im unteren Teil der Reaktorkammer vorgesehen ist, bei welchem Verfahren Gas in die Reaktorkammer (15) durch einen Windkasten (52) mit Gaseinlassdüsen (60) mit einem Einlass (62) eingeführt wird, bei welchen Verfahren Gas in den Windkasten (52) durch ein erstes Gaszufuhrsystem (70) eingeführt wird, **dadurch gekennzeichnet, dass** ein Strom sauerstoffhaltigen Gases durch ein zweites Gaszufuhrsystem (80) in den Windkasten (52) nahe des Einlasses (62) zumindest einer Düse (60) eingeführt wird.

10. Verfahren zum Betreiben eines zirkulierenden Sauerstoffverbrennungs-Wirbelschichtreaktors nach Patentanspruch 9, **dadurch gekennzeichnet, dass** der Strom sauerstoffreichen Gases von einem Abstand auf den Einlass (62) zumindest einer der Düsen (60) hin durch einen Auslass (85) in einem zweiten Gaszufuhrsystem (80) eingeführt wird.

11. Verfahren zum Betreiben eines zirkulierenden Sauerstoffverbrennungs-Wirbelschichtreaktors nach Patentanspruch 9, **dadurch gekennzeichnet, dass** ein Gemisch aus rezirkuliertem Abgas (45) und Sauerstoff durch das erste Gaszufuhrsystem (70) in den Windkasten (52) eingeführt wird und dass Gas, das mehr als 90 % Sauerstoff enthält, in die Nähe des Einlasses (62) zumindest einer Düse (60) durch das zweite Gaszufuhrsystem (80) eingeführt wird.

12. Verfahren zum Betreiben eines zirkulierenden Sauerstoffverbrennungs-Wirbelschichtreaktors nach Patentanspruch 9, **dadurch gekennzeichnet, dass** die Beimischung des Stroms sauerstoffreichen Gases zum Gas, das durch das erste Gaszufuhrsystem (70) in den Windkasten (52) eingeführt wird, am Einlass (62) der Düse beginnt.

13. Verfahren zum Betreiben eines zirkulierenden Sauerstoffverbrennungs-Wirbelschichtreaktors nach Patentanspruch 9, **dadurch gekennzeichnet, dass** der Strom von sauerstoffreichem Gaseinlass (62) im Windkasten (52) eine Ejektorwirkung erzeugt.

14. Verfahren zum Aktualisieren eines bestehenden zirkulierenden Wirbelschichtreaktors mit einem Windkasten (52), der mit Düsen (60) zur Einführung von Gas aus dem Windkasten (52) in eine Reaktorkammer (15) versehen ist und mit einem ersten Gaszufuhrsystem (70) zur Einführung von Gas in den Windkasten (52), bestehend aus Schritten zur Anordnung eines zweiten Gaszufuhrsystems (80), das eine Vielzahl Einlassrohre (84) unterhalb und in der Nähe von Düseneinlässen (62) aufweist, in den Windkasten des bestehenden zirkulierenden Wirbelschichtreaktors und Anordnung einer Quelle sauerstoffreichen Gases (100) in Verbindung mit dem zweiten Gaszufuhrsystem (80).

15. Verfahren zum Aktualisieren eines bestehenden zirkulierenden Wirbelschichtreaktors nach Patentanspruch 14, **dadurch gekennzeichnet, dass** der bestehende zirkulierende Wirbelschichtreaktor mit einem Abgasrückführkanal (95) versehen ist, der den Abgaskanal (45) mit dem Windkasten (52) des Reaktors verbindet, und eine Quelle für sauerstoffreiches Gas (100) in Verbindung mit dem ersten Gaszufuhrsystem (70) angeordnet ist.

## Revendications

1. Réacteur à lit fluidisé circulant à oxycombustion, comportant une chambre de réacteur (15) et un dispositif de distribution de gaz (50) prévu dans la section inférieure de la chambre de réacteur en vue d'introduire le gaz dans la chambre de réacteur, lequel dispositif de distribution de gaz comprend une chambre de ventilation comprenant des buses d'introduction de gaz, les buses d'introduction de gaz étant agencées pour introduire le gaz à partir de la chambre de ventilation dans la chambre de réacteur et présentant un orifice d'entrée qui débouche dans la chambre de ventilation, et un premier système d'alimentation en gaz (70) pour introduire le gaz dans la chambre de ventilation, **caractérisé en ce que** le dispositif de distribution de gaz (50) comprend en outre un second système d'alimentation en gaz (80) pour introduire le gaz dans la chambre de ventilation au voisinage d'au moins un orifice d'entrée de buse (62).

2. Réacteur à lit fluidisé circulant à oxycombustion selon la revendication 1, **caractérisé en ce que** le second système d'alimentation en gaz comporte plusieurs orifices de sortie (85), chacun des orifices de sortie étant agencé pour diriger le gaz à fournir vers l'orifice d'entrée de buse (62).

3. Réacteur à lit fluidisé circulant à oxycombustion selon la revendication 2, **caractérisé en ce que** les orifices de sortie sont disposés pour diriger le gaz dans l'orifice d'entrée de buse (62).

4. Réacteur à lit fluidisé circulant à oxycombustion selon la revendication 2, **caractérisé en ce que** les orifices de sortie (85) sont disposés à distance au-dessous de l'orifice d'entrée de buse (62).

5. Réacteur à lit fluidisé circulant à oxycombustion selon l'une quelconque des revendications 2 à 4, **caractérisé en ce que** l'orifice de sortie (85) et l'orifice d'entrée (62) produisent un effet d'éjection.

6. Réacteur à lit fluidisé circulant à oxycombustion selon la revendication 1, **caractérisé en ce que** la chambre de réacteur (15) est dotée d'un séparateur de particules (20) pour séparer les particules fluidisées qui sont entraînées avec les gaz provenant des réactions qui ont eu lieu dans la chambre de réaction, et **en ce que** le séparateur de particules est doté d'un orifice de sortie de gaz (35) et d'un orifice de sortie destiné aux particules séparées (30), et **en ce que** l'orifice de sortie de gaz est disposé en communication de flux avec le premier système d'alimentation en gaz par l'intermédiaire d'un conduit de recyclage (95).

7. Réacteur à lit fluidisé circulant à oxycombustion selon la revendication 6, **caractérisé en ce que** le conduit de recyclage (95) est doté d'une unité de mélange de gaz et **en ce que** l'unité de mélange de gaz est en communication de flux avec une source de gaz riche en oxygène (100).

8. Réacteur à lit fluidisé circulant à oxycombustion selon la revendication 1, **caractérisé en ce que** le second système d'alimentation en gaz est en communication de flux avec une source de gaz riche en oxygène (100).

9. Procédé d'exploitation d'un réacteur à lit fluidisé circulant à oxycombustion comportant une chambre de réacteur (15) et un dispositif de distribution de gaz (50) prévu dans la section inférieure de la chambre de réacteur, procédé dans lequel le gaz est introduit dans la chambre de réacteur (15) à travers une chambre de ventilation (52) comportant une buse d'introduction de gaz (60) dotée d'un orifice d'entrée (62), procédé dans lequel le gaz est introduit dans la chambre de ventilation (52) par l'intermédiaire d'un premier système d'alimentation en gaz (70), **caractérisé en ce qu'**un flux de gaz riche en oxygène est introduit par un second système d'alimentation en gaz (80) dans la chambre de ventilation (52) dans le voisinage de l'orifice d'entrée (62) d'au moins une buse (60).

10. Procédé d'exploitation d'un réacteur à lit fluidisé circulant à oxycombustion selon la revendication 9, **caractérisé en ce que** le courant de gaz riche en oxygène est introduit à une certaine distance de l'orifice d'entrée (62) de l'au moins une buse (60) par un orifice de sortie (85) dans un second système d'alimentation en gaz (80).

11. Procédé d'exploitation d'un réacteur à lit fluidisé circulant à oxycombustion selon la revendication 9, **caractérisé en ce qu'**un mélange de gaz de sortie recyclé (45) et d'oxygène est introduit dans la chambre de ventilation (52) à travers le premier système d'alimentation en gaz (70) et **en ce que** du gaz contenant plus de 90% d'oxygène est introduit dans le voisinage de l'orifice d'entrée (62) d'au moins une buse (60) à travers le second système d'alimentation en gaz (80).

12. Procédé d'exploitation d'un réacteur à lit fluidisé circulant à oxycombustion selon la revendication 9, **caractérisé en ce que** le mélange du courant de gaz riche en oxygène et de gaz introduit par le premier système d'alimentation en gaz (70) dans la chambre de ventilation (52) est amorcé au niveau de l'orifice d'entrée (62) de la buse.

13. Procédé d'exploitation d'un réacteur à lit fluidisé circulant à oxycombustion selon la revendication 9, **caractérisé en ce que** le courant de gaz riche en oxygène à l'orifice d'entrée (62) induit un effet d'éjection pour le gaz dans la chambre de ventilation (52).

14. Procédé de mise à niveau d'un réacteur à lit fluidisé circulant existant comportant une chambre de ventilation (52) dotée de buses (60) permettant d'introduire du gaz provenant de ladite chambre de ventilation (52) dans une chambre de réacteur (15) et un premier système d'alimentation en gaz (70) pour fournir du gaz à la chambre de ventilation (52), comportant des étapes de disposition d'un second système d'alimentation en gaz (80) comportant une pluralité de tuyaux d'alimentation (84) au-dessous et dans le voisinage des orifices d'entrée de buse (62) de la chambre de ventilation du réacteur à lit fluidisé circulant existant et de disposition d'une source de gaz riche en oxygène (100) en liaison avec le second système d'alimentation en gaz (80).

15. Procédé de mise à niveau d'un réacteur à lit fluidisé circulant existant selon la revendication 14, **caractérisé en ce que** le réacteur à lit fluidisé circulant existant est doté d'un conduit de recyclage de gaz de sortie (95) raccordant le conduit de gaz de sortie (45) à la chambre de ventilation (52) du réacteur et **en ce que** la source du gaz riche en oxygène (100) est agencée en liaison avec le premier système d'alimentation en gaz (70).
